# EUROPÄISCHE PATENTSCHRIFT

(11) **EP 2 241 416 B1**
(45) Veröffentlichungstag und Bekanntmachung des Hinweises auf die Patenterteilung: **10.10.2012**
(21) Anmeldenummer: 10002710.1
(22) Anmeldetag: 15.03.2010
(51) Int. Cl.: B25J 17/02

(54) **Roboter mit Delta-Kinematik**
Robot with delta kinematics
Robot doté d'une cinématique delta

(30) Priorität: 17.04.2009 DE 102009017907
(43) Veröffentlichungstag der Anmeldung: 20.10.2010
(73) Patentinhaber: Weber Maschinenbau GmbH Breidenbach, 35236 Breidenbach (DE)
(72) Erfinder:
(74) Vertreter: Manitz, Finsterwald & Partner GbR

(56) Entgegenhaltungen:
- EP-A2- 0 997 238
- US-A- 4 976 582
- US-B1- 6 330 837

## Beschreibung

Die Erfindung betrifft einen Roboter mit Delta-Kinematik.

Ein nach dem Delta-Prinzip arbeitender Roboter, welcher auch als Delta-Roboter oder als Parallelroboter bezeichnet wird, ist grundsätzlich bekannt und wird, beispielsweise im Bereich der Lebensmittelindustrie, zur schnellen und präzisen Positionierung von leichten Gegenständen, wie z.B. Lebensmittelportionen, mittels Vakuumsaugern oder Greifern eingesetzt. Ein besonderer Vorteil der Delta-Kinematik liegt in der hohen Dynamik und in der besonderen Genauigkeit, mit welcher Positionen angefahren werden können.

Ein Delta-Roboter umfasst typischerweise eine meist ortsfest angeordnete Roboterbasis und eine relativ zu der Roboterbasis bewegbare Werkzeugaufnahme, an welcher ein an den jeweiligen Anwendungsbereich angepasstes Werkzeug, z.B. ein Greifer, angebracht ist. Die Werkzeugaufnahme ist mittels mindestens dreier motorisch angetriebener, bewegbarer Steuerarme mit der Roboterbasis verbunden. Jeder Steuerarm umfasst einen an der Roboterbasis befestigten oberen Armabschnitt und einen an den oberen Armabschnitt angelenkten und zu der Werkzeugaufnahme führenden unteren Armabschnitt.

Zum Verdrehen eines an der Werkzeugaufnahme angebrachten Werkzeugs um seine Achse, die auch als vierte Achse bezeichnet wird, ist typischerweise ein Drehantrieb im Bereich der Roboterbasis ortsfest angeordnet, dessen Drehmoment zu der bewegbaren Werkzeugaufnahme übertragen werden muss.

Bekannte Delta-Roboter weisen hierfür eine Teleskopachse auf. Die Drehmomentübertragung erfolgt dabei mittels einer Vielkeilwelle oder durch eine seitlich versetzte Anordnung von Profilelementen. Beide Lösungen zeichnen sich dadurch aus, dass die Drehmomenteinleitung in die Teleskopachse über ein mit der Roboterbasis fest verbundenes, gelenkig gelagertes Ende eines ersten Teils eines Schiebesitzes stattfindet, während die Drehmomentausleitung über ein relativ zu dem ersten Teil verschiebbares zweites Teil des Schiebesitzes erfolgt, welches an der Werkzeugaufnahme angebracht ist.

Diese Einrichtungen zur Übertragung von Drehmoment sind verschleißanfällig und lediglich zur Übertragung kleinerer Drehmomente geeignet. Ferner führt eine Reduzierung des notwendigerweise vorhandenen Spiels in der Drehmomentübertragungseinrichtung zwangsläufig zu Schwergängigkeiten des Gesamtsystems. Ein weiterer Nachteil ist die Hubbegrenzung.

Die US 4,976,582 offenbart einen Roboter mit Delta-Kinematik gemäß dem Oberbegriff des Anspruchs 1.

Ein solcher Roboter umfasst eine Werkzeugaufnahme, die eine über Steuerarme mit einer Roboterbasis verbundene Gelenkplatte und einen Antrieb zum Verdrehen eines von der Werkzeugaufnahme aufgenommenen Werkzeugs aufweist, welcher an der Gelenkplatte befestigt ist.

Um die Übertragung von Drehmoment von dem auf der Oberseite der Gelenkplatte sitzenden Antrieb an das an der Unterseite der Gelenkplatte aufgenommene Werkzeug zu ermöglichen, ist eine Bohrung in der Gelenkplatte vorgesehen.

Erfindungsgemäß ist vorgesehen, dass ein Abschnitt des Antriebs formschlüssig in die Bohrung eingreift.

Einem solden Roboter liegt der allgemeine Gedanke zugrunde, den Antrieb zum Verdrehen des Werkzeugs, d.h. den Antrieb für die vierte Achse, nicht an der Roboterbasis, sondern stattdessen an der Gelenkplatte anzubringen. Der Antrieb zum Verdrehen des Werkzeugs ist mit anderen Worten also formschlüssig in die Werkzeugaufnahme integriert.

Es braucht also kein Drehmoment von der Roboterbasis an die Werkzeugaufnahme übertragen zu werden. Ein solcher Roboter kommt folglich ohne eine Einrichtung zur Übertragung von Drehmoment zwischen der. Roboterbasis und der Werkzeugaufnahme, aus und weist dadurch einen einfacheren mechanischen Aufbau auf. Insbesondere werden die Probleme überwunden, die sich beispielsweise aus der Verschleißanfälligkeit bekannter Drehmomentübertragungseinrichtungen bzw. aus der Schwergängigkeit des Gesamtsystems aufgrund solcher Drehmomentübertragungseinrichtungen ergeben.

In der DE-A-199 40 927 ist eine Drehmaschine offenbart, in deren Arbeitsraum ein Fräswerkzeug an einer ansteuerbaren Parallelkinematik angeordnet ist. Eine das Fräswerkzeug antreibende Spindel ist an einer Aufnahmeplatte der Parallelkinematik angeordnet.

Die US-A-5 388 935 offenbart eine Vorrichtung zum Bearbeiten von Werkstücken, bei welcher das zu bearbeitende Werkstück auf der unteren Platte einer Hexapod-artigen Anordnung aufliegt. An der oberen Platte ist ein Antrieb montiert, wobei ein Spindelkopf des Antriebs einschließlich des Werkzeugs durch eine Ausnehmung der Platte nach unten ragt.

Der Erfindung liegt die Aufgabe zugrunde, auf besonders einfache Weise eine korrekte Ausrichtung des Antriebs relativ zu der Gelenkplatte sicherzustellen.

Zur Lösung der Aufgabe ist ein Roboter mit den Merkmalen des Anspruchs 1 vorgesehen.

Vorteilhafte Ausbildungen der Erfindung sind den Unteransprüchen, der Beschreibung und der Zeichnung zu entnehmen.

Gemäß einer Ausführungsform ist der Antrieb durch einen Motor, insbesondere einen Elektromotor, gebildet. Handelt es sich bei dem Motor überdies um einen Getriebemotor, wird eine besondere Kompaktheit des Antriebs erreicht, da ein Getriebe in diesem Fall bereits in den Motor integriert ist und folglich kein zusätzliches Getriebe zwischen Motor und Werkzeug vorgesehen werden muss. Vielmehr kann das Werkzeug direkt an eine Ausgangswelle des Motors angekoppelt werden.

Vorteilhafterweise ist der Antrieb in einem Gehäuse untergebracht. Der Roboter lässt sich hierdurch leicht reinigen und eignet sich somit besonders gut für hygienesensitive Anwendungen, wie beispielsweise der Handhabung von Lebensmittelprodukten.

Gemäß einer weiteren Ausführungsform ist der Antrieb an einer dem Werkzeug abgewandten Seite der Gelenkplatte befestigt. Der Antrieb sitzt mit anderen Worten auf der Oberseite der Gelenkplatte, während das Werkzeug an der Unterseite der Gelenkplatte von der Werkzeugaufnahme aufgenommen wird.

Durch die Bohrung hindurch kann sich eine Ausgangswelle des Antriebs erstrecken.

Damit das Werkzeug direkt an den Antrieb angekoppelt werden kann, ragt eine Ausgangswelle des Antriebs vorzugsweise über die Gelenkplatte hinaus.

Eine Ankopplung des aufzunehmenden Werkzeugs an den Antrieb gestaltet sich noch einfacher, wenn ein Adapter für das aufzunehmende Werkzeug an einer Ausgangswelle des Antriebs angebracht ist. Dabei kann der Adapter derart ausgebildet sein, dass das Werkzeug lediglich auf den Adapter aufgesteckt zu werden braucht und mittels einer geeigneten Verriegelung an diesem arretiert wird. Eine derartige Verriegelung kann beispielsweise einen Rastmechanismus und/oder eine Sicherungsschraube bzw. einen Sicherungsstift umfassen. Damit sich der Adapter bei einer Übertragung von Drehmoment von dem Antrieb an das Werkzeug nicht relativ zu dem Werkzeug verdreht, kann der Adapter ein unrundes Profil, beispielsweise ein Mehrkantprofil aufweisen, welches vorteilhafterweise an den Querschnitt einer Aufnahme des Werkzeugs zur Aufnahme des Adapters angepasst ist.

Nachfolgend wird die Erfindung rein beispielhaft anhand einer vorteilhaften Ausführungsform unter Bezugnahme auf die beigefügte Zeichnung beschrieben. Es zeigen:
- Fig. 1: eine perspektivische Ansicht eines erfindungsgemäßen Roboters;
- Fig. 2: eine perspektivische Ansicht einer Roboterbasis des Roboters von Fig. 1;
- Fig. 3: eine perspektivische Teilansicht, welche die Befestigung eines Antriebs für einen Steuerarm des Roboters von Fig. 1 an der Roboterbasis zeigt;
- Fig. 4: eine perspektivische Teilansicht, welche die Lagerung eines unteren Armabschnitts an einem oberen Armabschnitt eines Steuerarms des Roboters von Fig. 1 zeigt;
- Fig. 5: eine perspektivische Schnittansicht einer Gelenkaufnahme;
- Fig. 6: eine Querschnittsansicht einer Gelenkaufnahme mit Lagerhülse und Passschraube;
- Fig. 7: eine perspektivische Ansicht einer Werkzeugaufnahme des Roboters von Fig. 1 von oben;
- Fig. 8: eine perspektivische Ansicht der Werkzeugaufnahme von Fig. 7 von unten;
- Fig. 9: eine Draufsicht auf eine Gelenkplatte mit kugelförmigen Gelenkköpfen; und
- Fig. 10A und B: perspektivische Ansichten der Werkzeugaufnahme mit aufgeschnittener Gelenkplatte und nicht eingehaustem Motor.

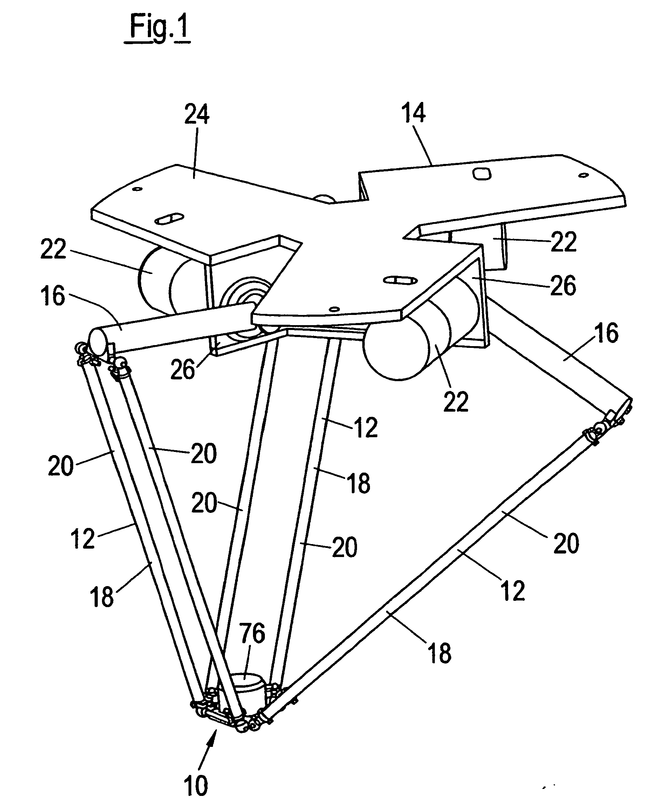

In Fig. 1 ist ein erfindungsgemäßer Delta-Roboter dargestellt. Der Roboter umfasst eine Werkzeugaufnahme 10, die über drei Steuerarme 12 mit einer Roboterbasis 14 verbunden ist.

Jeder Steuerarm 12 umfasst einen oberen Armabschnitt 16 und einen unteren Armabschnitt 18, welcher ein Paar von dünnwandigen Rohren 20 umfasst. Die Rohre 20 können aus Edelstahl oder Kohlenstofffaser bestehen und sind jeweils mit dem zugeordneten oberen Armabschnitt 16 und der Werkzeugaufnahme 10 gelenkig verbunden.

Die oberen Armabschnitte 16 sind um 120° zueinander versetzt verschwenkbar an der Roboterbasis 14 gelagert. Zur Verschwenkung der oberen Armabschnitte 16 ist jedem oberen Armabschnitt 16 ein Hauptantrieb 22 zugeordnet, welcher einen Elektromotor einschließlich Getriebe und Lagerung umfasst. Dabei sind die Hauptantriebe 22 so ausgeführt, dass sie ohne eine zusätzliche Einhausung verbaut werden können. Die drei Hauptantriebe 22 sind entlang eines Kreises angeordnet und jeweils um 120° zueinander beabstandet. Dabei liegen die Drehachsen der Hauptantriebe 22 parallel zu jeweiligen Tangenten des Kreises bei einem Winkelversatz von 120°.

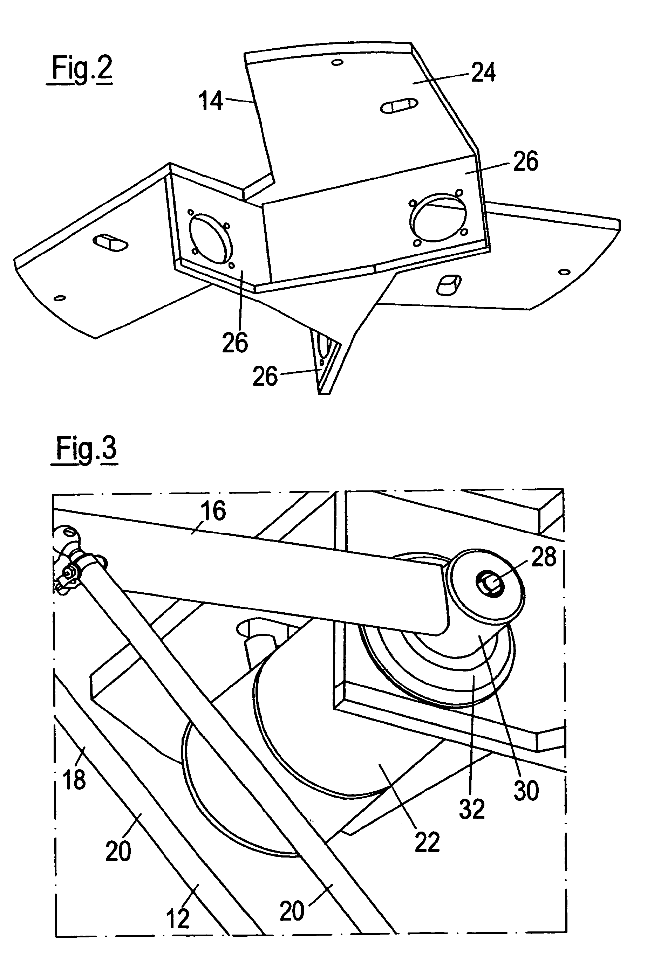

Die Roboterbasis 14 weist eine Grundplatte 24 auf, an deren Unterseite drei plattenförmige Lagersitze 26 für die Hauptantriebe 22 angebracht, z.B. angeschweißt, sind (Fig. 1 und 2). Die Hauptantriebe 22 können an die Lagersitze 26 angeschraubt sein.

Mit Hilfe der Roboterbasis 14 und insbesondere mittels der Grundplatte 24 kann der Roboter an einer geeigneten Trägerstruktur, auch Zellenkonstruktion genannt, montiert, z.B. verschraubt, werden.

Jeder obere Armabschnitt 16 ist direkt mit einer Ausgangswelle 28 des zugeordneten Hauptantriebs 22 verbunden, z.B. verschraubt. Die entsprechenden Schrauben sind durch eine Abdeckung 30 verdeckt (Fig. 3). Zwischen jedem oberen Armabschnitt 16 und seinem zugeordneten Lagersitz 26 ist eine Dichtung (nicht gezeigt) vorgesehen, welche in einer Deckscheibe 32 implementiert ist.

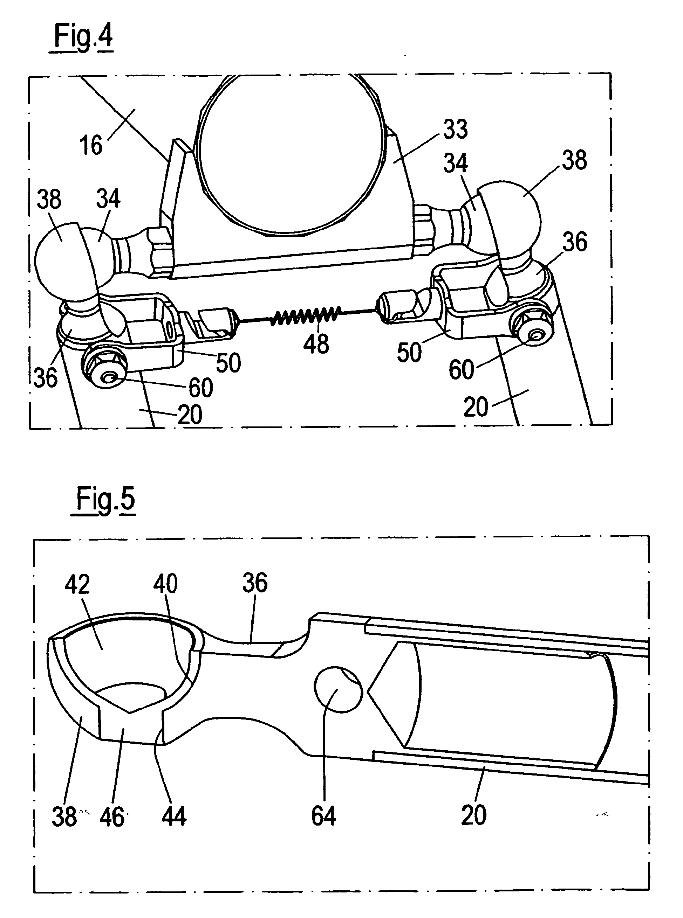

Die gelenkige Verbindung der Rohre 20 eines unteren Armabschnitts 18 mit seinem oberen Armabschnitt 16 erfolgt mit Hilfe zweier Kugelgelenke, die auf gegenüberliegenden Seiten des oberen Armabschnitts 16 angeordnet sind (Fig. 4).

Jedes Kugelgelenk umfasst einen in ein Trägerteil 33 des oberen Armabschnitts 16 eingeschraubten Gelenkkopf 34 und eine dem Gelenkkopf 34 zugeordnete Gelenkaufnahme 36, die an einem Rohr 20 des unteren Armabschnitts 16 angebracht ist. Beispielsweise können die Gelenkaufnahmen 36 in die Rohre 20 eingeklebt und/oder formschlüssig in diese eingesetzt sein.

Jede Gelenkaufnahme 36 weist in einem dem Rohr 20 abgewandten vorderen Abschnitt 38 eine im Wesentlichen halbsphärisch ausgebildete Lagerschalenaufnahme 40 auf, in die eine Lagerschale 42 eingesetzt ist. Die Lagerschale 42 ist durch eine Übermaßpassung reibschlüssig in der Lagerschalenaufnahme 40 fixiert und/oder lösbar mit dieser verklebt. In dem vorderen Abschnitt 38 der Gelenkaufnahme 36 ist ferner eine Bohrung 44 vorgesehen, die es ermöglicht, die Lagerschale 42 aus der Lagerschalenaufnahme 40 herauszudrücken. Zur Gewährleistung einer exakten Positionierung der Lagerschale 42 in der Lagerschalenaufnahme 40 besitzt die Lagerschale 42 einen Sockel 46, der formschlüssig in die Bohrung 44 eingreift.

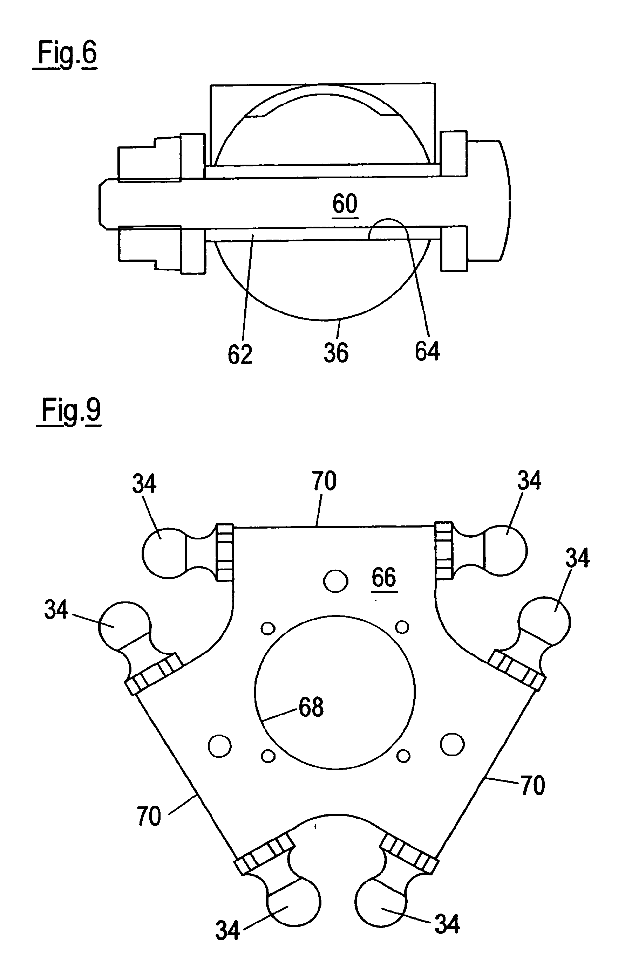

Die Lagerschalen 42 dienen zur Aufnahme der Gelenkköpfe 34 und sind dementsprechend an die Form der Gelenkköpfe 34 angepasst. Um ein Abspringen der Gelenkaufnahmen 36 von ihrem jeweiligen Gelenkkopf 34 zu verhindern, werden die Rohre 20 eines Steuerarms 12 mittels einer Zugfeder 48 zusammengehalten. Die Zugfeder 48 ist an jedem ihrer Enden mit einem Halter 50 in Gestalt eines im Wesentlichen U-förmigen Bügels verbunden, welcher mittels einer Passschraube 60 verschwenkbar an einer der Gelenkaufnahmen 36 gelagert ist. Die Passschraube 60 erstreckt sich durch eine Lagerhülse 62, welche in eine sich quer durch die Gelenkaufnahme 36 hindurch erstreckende Bohrung 64 eingesetzt ist (Fig. 5 und 6).

Obwohl sich eine Zugfeder 48 besonders gut zum Zusammenhalten der Rohre 20 eignet, sei darauf hingewiesen, dass anstelle der Zugfeder 48 grundsätzlich auch ein anderes Bauteil mit elastischen Eigenschaften, z.B. ein Elastomer, oder ein nicht federndes Verbindungselement zum Zusammenhalten der Rohre 20 verwendet werden kann.

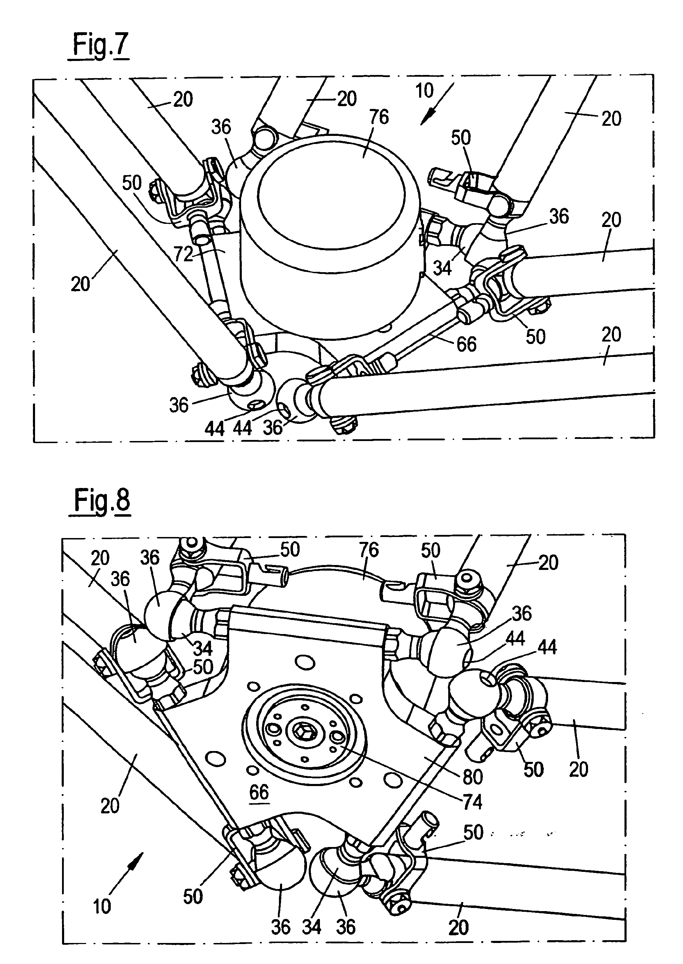

Wie Fig. 1 und insbesondere auch Fig. 7 und 8 zu entnehmen ist, sind die die unteren Armabschnitte 18 bildenden Paare von Rohren 20 nicht nur mit ihrem jeweiligen oberen Armabschnitt 16, sondern auch mit der Werkzeugaufnahme 10 gelenkig verbunden, und zwar mit Hilfe von Kugelgelenken der Art, wie sie voranstehend in Verbindung mit Fig. 4 bis 6 beschrieben wurde.

Die Werkzeugaufnahme 10 weist eine Gelenkplatte 66 auf, welche drei um eine zentrale Bohrung 68 herum angeordnete Plattenabschnitte 70 umfasst, die jeweils um 120° zueinander beabstandet sind. Jeder Plattenabschnitt 70 ist einem Steuerarm 12 zugeordnet. Gelenkköpfe 34 sind auf gegenüberliegenden Seiten jedes Plattenabschnitts 70 angebracht und zur Aufnahme der Gelenkaufnahmen 36 vorgesehen, die mit den Rohren 20 des entsprechenden Steuerarms 12 verbunden sind. Bezüglich des Aufbaus dieser Gelenkaufnahmen 36 wird auf Fig. 4 bis 6 und die dazugehörige Beschreibung verwiesen. Auch im Bereich der Gelenkplatte 66 werden die Rohre 20 eines Steuerarms 12 durch eine (nicht dargestellte) Zugfeder zusammengehalten, die mit Hilfe von Haltern 50 der bereits beschriebenen Art mit den Gelenkaufnahmen 36 verbunden ist. Entsprechend den voranstehenden Ausführungen kann auch hier anstelle einer Zugfeder ein unelastisches Verbindungselement verwendet werden.

Auf einer zur Roboterbasis 14 weisenden Oberseite 72 der Gelenkplatte 66 ist ein elektrischer Getriebemotor 74 angeordnet, um ein von der Werkzeugaufnahme 10 aufgenommenes Werkzeug, z.B. einen Greifer, um eine zur Gelenkplatte 66 senkrechte Achse zu verdrehen. Der Getriebemotor 74 bildet mit anderen Worten einen Antrieb für die so genannte vierte Achse. Der Getriebemotor 74 ist in einem auf der Gelenkplatte 66 aufsitzenden Gehäuse 76 untergebracht (Fig. 7 und 8). Der Getriebemotor 74 und das Gehäuse 76 können mit der Gelenkplatte 66 verschraubt sein.

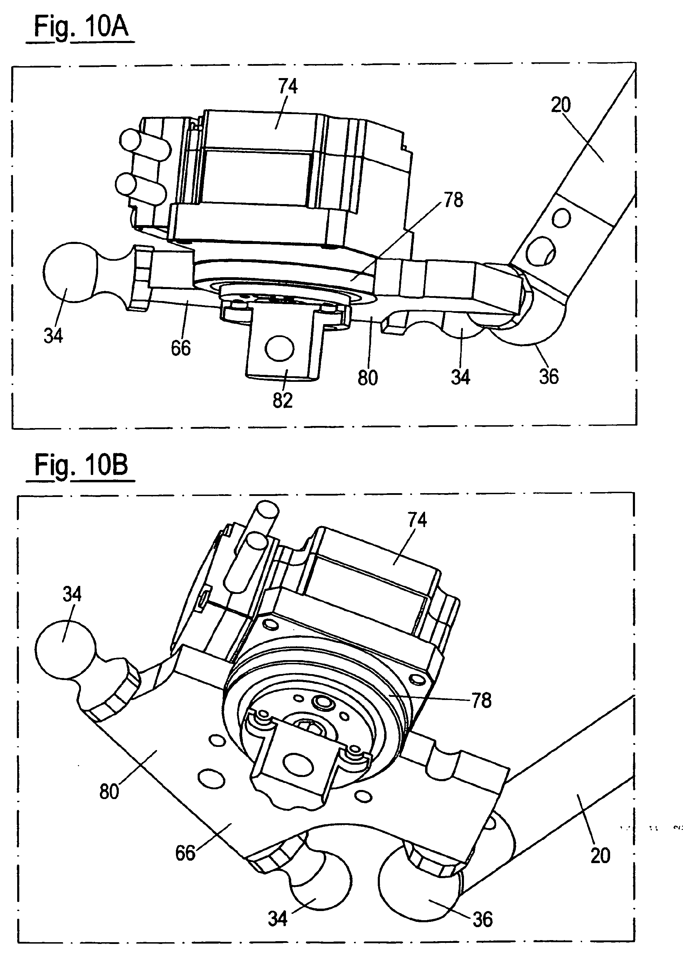

An seiner Unterseite weist der Getriebemotor 74 einen Sockelabschnitt 78 auf, welcher zumindest annähernd formschlüssig in die Bohrung 68 der Gelenkplatte 66 eingreift, um eine korrekte Positionierung des Getriebemotors 74 auf der Gelenkplatte 66 zu gewährleisten (Fig. 10A und 10B).

An einem über die Unterseite 80 der Gelenkplatte 66 hervorragenden Abschnitt einer (nicht dargestellten) Ausgangswelle des Getriebemotors 74 ist ein Adapter für das aufzunehmende Werkzeug angebracht. Der Adapter 82 weist ein in einer zur Ausgangswelle des Getriebemotors 74 senkrechten Ebene unrundes, insbesondere mehrkantiges, Profil auf, welches an den Querschnitt einer Aufnahme des aufzunehmenden Werkzeugs für den Adapter 82 angepasst ist, um eine Verdrehung des Adapters 82 relativ zu dem aufgenommenen Werkzeug zu verhindern. Über den Adapter 82 lässt sich das aufzunehmende Werkzeug direkt und insbesondere ohne die Zwischenschaltung eins zusätzlichen Getriebes an den Getriebemotor 74 anflanschen. Durch das direkte Anflanschen des Werkzeugs an den Getriebemotor 74 kann auf eine Lagerung der vierten Achse in der Gelenkplatte 66 verzichtet werden.

### Bezugszeichenliste

- 10: Werkzeugaufnahme
- 12: Steuerarm
- 14: Roboterbasis
- 16: oberer Armabschnitt
- 18: unterer Armabschnitt
- 20: Rohr
- 22: Hauptantrieb
- 24: Grundplatte
- 26: Lagersitz
- 28: Hauptantriebsausgang
- 30: Abdeckung
- 32: Deckscheibe
- 33: Trägerteil
- 34: Gelenkkopf
- 36: Gelenkaufnahme
- 38: vorderer Abschnitt
- 40: Lagerschalenaufnahme
- 42: Lagerschale
- 44: Bohrung
- 46: Sockel
- 48: Zugfeder
- 50: Halter
- 60: Passschraube
- 62: Lagerhülse
- 64: Bohrung
- 66: Gelenkplatte
- 68: Bohrung
- 70: Plattenabschnitt
- 72: Oberseite
- 74: Getriebemotor
- 76: Gehäuse
- 78: Sockelabschnitt
- 80: Unterseite
- 82: Adapter

## Patentansprüche

1. Roboter mit Delta-Kinematik, umfassend eine Werkzeugaufnahme (10), die eine über Steuerarme (12) mit einer Roboterbasis (14) verbundene Gelenkplatte (66) und einen Antrieb (74) zum Verdrehen eines von der Werkzeugaufnahme (10) aufgenommenen Werkzeugs aufweist, welcher an der Gelenkplatte (66) befestigt ist,
wobei eine Bohrung (68) in der Gelenkplatte (66) vorgesehen ist,
**dadurch gekennzeichnet, dass**
ein Abschnitt (78) des Antriebs (74) formschlüssig in die Bohrung (68) eingreift.

2. Roboter nach Anspruch 1,
**dadurch gekennzeichnet, dass**
der Antrieb einen Motor, insbesondere einen Getriebemotor (74), umfasst.

3. Roboter nach Anspruch 1 oder 2,
**dadurch gekennzeichnet, dass**
der Antrieb (74) in einem Gehäuse (76) untergebracht ist.

4. Roboter nach einem der vorstehenden Ansprüche,
**dadurch gekennzeichnet, dass**
der Antrieb (74) an einer dem Werkzeug abgewandten Seite (72) der Gelenkplatte (66) befestigt ist.

5. Roboter nach einem der vorstehenden Ansprüche,
**dadurch gekennzeichnet, dass**
die Bohrung (68) bezüglich der Gelenkplatte (66) zentral ausgerichtet ist.

6. Roboter nach einem der vorstehenden Ansprüche,
**dadurch gekennzeichnet, dass**
sich eine Ausgangswelle des Antriebs (74) durch die Bohrung (68) hindurch erstreckt.

7. Roboter nach einem der vorstehenden Ansprüche,
**dadurch gekennzeichnet, dass**
ein freier Endabschnitt einer Ausgangswelle des Antriebs (74) über die Gelenkplatte (66) hinausragt.

8. Roboter nach einem der vorstehenden Ansprüche,
**dadurch gekennzeichnet, dass**
ein Adapter (82) für das aufzunehmende Werkzeug an einer Ausgangswelle des Antriebs (74) angebracht ist.

## Claims

1. A robot having delta kinematics, comprising a tool receiver (10) which has a pivotal plate (66) connected to a robot base (14) via control arms (12) and comprising a drive (74) for the rotation of a tool received by the tool receiver (10), said drive being fastened to the pivotal plate (66),
wherein a bore (68) is provided in the pivotal plate (66),
**characterised in that**
a section (78) of the drive (74) engages in form-fitted manner into the bore (68).

2. A robot in accordance with claim 1,
**characterised in that**
the drive includes a motor, in particular a geared motor (74).

3. A robot in accordance with claim 1 or claim 2,
**characterised in that**
the drive (74) is accommodated in a housing (76).

4. A robot in accordance with any one of the preceding claims,
**characterised in that**
the drive (74) is fastened to a side (72) of the pivotal plate (66) remote from the tool.

5. A robot in accordance with any one of the preceding claims,
**characterised in that**
the bore (68) is aligned centrally with respect to the pivotal plate (66).

6. A robot in accordance with any one of the preceding claims,
**characterised in that**
an output shaft of the drive (74) extends through the bore (68).

7. A robot in accordance with any one of the preceding claims,
**characterised in that**
a free end section of an output shaft of the drive (74) projects beyond the pivotal plate (66).

8. A robot in accordance with any one of the preceding claims,
**characterised in that**
an adapter (82) for the tool to be received is attached to an output shaft of the drive (74).

## Revendications

1. Robot doté d'une cinématique delta, comprenant un porte-outils (10) qui comprend une plaque d'articulation (66) reliée à une base de robot (14) via des bras de commande (12) et un entraînement (74) pour mettre en rotation un outil reçu par le porte-outils (10), l'entraînement étant fixé à la plaque d'articulation (66), dans lequel il est prévu un perçage (68) dans la plaque d'articulation (66),
**caractérisé en ce qu'**un tronçon (78) de l'entraînement (74) s'engage en coopération de formes dans le perçage (68).

2. Robot selon la revendication 1,
**caractérisé en ce que** l'entraînement comprend un moteur, en particulier un moto-réducteur (74).

3. Robot selon la revendication 1 ou 2,
**caractérisé en ce que** l'entraînement (74) est logé dans un boîtier (76).

4. Robot selon l'une des revendications précédentes,
**caractérisé en ce que** l'entraînement (74) est fixé sur un côté (72) de la plaque d'articulation (66) détourné de l'outil.

5. Robot selon l'une des revendications précédentes,
**caractérisé en ce que** le perçage (68) est orienté de manière centrale par rapport à la plaque d'articulation (66).

6. Robot selon l'une des revendications précédentes,
**caractérisé en ce qu'**un arbre de sortie de l'entraînement (74) s'étend à travers le perçage (68).

7. Robot selon l'une des revendications précédentes,
**caractérisé en ce qu'**un tronçon terminal libre d'un arbre de sortie de l'entraînement (74) fait saillie au-delà de la plaque d'articulation (66).

8. Robot selon l'une des revendications précédentes,
**caractérisé en ce qu'**un adaptateur (82) pour l'outil à loger est monté sur un arbre de sortie de l'entraînement (74).
